# EUROPEAN PATENT SPECIFICATION

(11) **EP 4 529 819 B1**
(45) Date of publication and mention of the grant of the patent: **20.08.2025**
(21) Application number: 23199848.5
(22) Date of filing: 26.09.2023
(51) Int. Cl.: A47J 42/34, B02C 18/00

(54) **GRINDING DEVICE**
SCHLEIFVORRICHTUNG
DISPOSITIF DE MEULAGE

(43) Date of publication of application: 02.04.2025
(73) Proprietor: Heine Technische Beratungsgesellschaft mbH, 32584 Löhne (DE)
(72) Inventor: Heine, Robert, 32584 Löhne (DE)
(74) Representative: Gille Hrabal Partnerschaftsgesellschaft mbB Patentanwälte

(56) References cited:
- US-A1- 2017 164 786
- US-A1- 2020 061 629
- US-A1- 2021 007 555
- US-B2- 8 733 679

## Description

The invention relates to a grinding device for cannabis products.

Due to the now widespread use of medicinal cannabis (marijuana), and furthermore the ongoing efforts in many countries to legalize recreational cannabis, there is an increasing demand for suitable equipment for the preparation of cannabis. Cannabis products are sold in the form of dried flower parts, which are typically ground prior to use.

There are a variety of grinding or comminuting devices or grinders for cannabis products. Known in particular are hand-operated devices with several housing parts that can be rotated against each other, which grind the product to be ground by grinding elements such as teeth.

US 2016 100 715 A1 describes a multi-part, manually operated grinder comprising a plurality of housing parts and intermediate parts that perform different functions. For example, holed plates and a screen are provided to separate a fine fraction of the chopped product. A two-part manual grinder is known from US 2019 69 277 A1. The cutting elements shown here have sharp or blunt edges, depending on the direction of rotation. In principle, with such grinders, the degree of grinding, i.e., the particle size of the ground product, can be influenced by the duration of grinding. CA 3 095 488 A1 describes a device with a grinder for grinding plant material. The grinder includes a blade with wall blades protruding inwardly from a wall and a motor-driven shaft with radially protruding shaft blades. Similar grinding devices are known from US 2017 0 164 786 A1, US 8 733 679 B2, US 2020 061 629 A1 and US 2021 007 555 A1.

The known grinding devices have some disadvantages. First of all, they only allow a hardly defined and therefore non-reproducible grinding. Therefore, the particle size and/or particle size distribution of the ground product cannot be set in a defined way, which is particularly problematic for medicinal cannabis, as the effect of the products strongly depends on the particle size during consumption. In addition, the product to be chopped is squashed (crushed), which leads to sticking and smearing of the grinder. On the one hand, due to the described contamination, the manual force required to rotate the housing parts increases over time, which leads to a poor operating comfort.

Secondly, cleaning is difficult due to the included resin and is therefore rarely performed in practice.

It is the task of the invention to provide a further developed grinding device with which at least parts of the above-mentioned disadvantages are eliminated.

The task is solved by the grinding device according to claim 1. Advantageous embodiments are given in the dependent claims.

A grinding device for cannabis products serves to solve the task. The grinding device comprises a housing having at least two housing parts and at least one grinding element connected to a housing part for grinding cannabis products. An outer side of the grinding element has a greater distance to the axis in a front region with respect to the direction of rotation than in a rear region.

The grinding element thus extends further radially outward in its front region than in its rear region. In this way, crushing of material to be ground is prevented. In particular, the distance to the axis is measured when viewed along the axis, i.e., in top view.

In particular, during grinding, a counter element of the grinding device is located adjacent to the outside of the grinding element and relative rotation occurs between the grinding element and the counter element. It has been shown that in grinding devices of the prior art, the greatest amount of deposits and sticking occurs at the outer side of the grinding elements. Due to the described configuration, the distance between the grinding element and the counter element is smallest in the front area during rotation and becomes larger towards the rear. In this way, crushing of the cannabis product is prevented particularly effectively.

A grinding element is an element for grinding cannabis products. In particular, the grinding device further comprises a counter element. When rotated along the direction of rotation, the grinding element is rotated with one of the housing parts so as to perform a relative movement to a counter element, for example another grinding element, which may be mounted to another of the housing parts. In this way, the cannabis product can be ground, for example by shearing. The grinding element is typically connected to a first housing part and the counter element is connected to the other housing part. The grinding element and/or the counter element may include a cutting edge for cutting the cannabis product. A cutting edge is typically disposed at the front with respect to the direction of rotation. A counter element may be identical or similar in construction to a grinding element or different from a grinding element. In one configuration, several or all counter elements are designed as grinding elements.

The outer side is a side located on the outside of the grinding element with respect to the central axis, i.e., a side which faces away from the axis in a radial direction. The greater distance may be in the region of a lower outer edge bounding the grinding element at a lower end. The lower end of the grinding element is the end by which the grinding element is secured to a base. The greater distance may be in the region of an upper outer edge bounding the grinding element at an upper end. The upper end is typically a protruding and/or free end of the grinding element. The greater distance may be in the region between a lower end and an upper end. In particular, the distance to the axis is measured at a constant distance from a base and/or from an upper end of the grinding element.

For example, the front region of the outer side is a region in the foremost 25% of the total length of the outer side. It may be the foremost region. The rear region of the outer side is, for example, a region in the rearmost 25% of the total length of the outer side. It may be rearmost region.

The difference in the distance from the axis between the front region and the rear region may be at most 1 mm, preferably at most 0.6 mm or at most 0.4 mm and/or at least 0.1 mm, preferably at least 0.2 mm, particularly preferably at least 0.3 mm.

Preferably, a plurality of grinding elements are provided. In particular, the features, functions and advantages of the grinding element described herein and below apply to a plurality of grinding elements, preferably to the majority of the grinding elements, for example at least 80% of all grinding elements, and in one configuration to all grinding elements. If the features apply to the majority of the grinding elements, on the one hand the described advantages can be exploited to the greatest extent. On the other hand, it is possible that one or more selected elements are present which are configured differently to grind on the one hand and to perform specific tasks on the other hand, such as a central element described further below. In addition to the grinding elements, other elements can of course also be present that only perform certain other tasks, such as a scraper element described further below.

The grinding element is typically mounted on a base. The base is preferably a housing part. For example, the base may be the upper surface of the respective housing part which delimits the interior space of the grinding device. The base is in particular flat (planar). The grinding element protrudes from the base. However, it is not excluded that a grinding element is mounted on an additional element, which in turn may be fixed with respect to the housing. In this case, there is an indirect connection between the housing part and the grinding element. In principle, the connection of the at least one grinding element to the housing part is a rotationally fixed connection. Further degrees of freedom may be restricted.

The housing parts delimit an interior space of the grinding device at least partially, and in particular completely. The interior space serves to accommodate the product to be ground and/or the ground product. The grinding elements act in the interior space.

The grinding device may be used, for example, as follows: The product to be ground can be placed on one of the housing parts when the housing is open, for example. The housing can be closed. The product to be ground is now in the interior space. The product is rotated for grinding. The housing can be opened. The ground product can be removed from the open housing, for example by removing it from one of the housing parts.

Typically, there is a first plurality of elements such as grinding elements which protrude from a first base, in particular a first housing part. Typically, there is a second plurality of elements such as grinding elements which protrude from a first base, in particular a second housing part. During rotating, the first plurality of elements and the second plurality of elements cooperate to grind of the cannabis product. In a closest position of a pair of a grinding element and a cooperating counter element, grinding takes place. In particular, there is no direct contact between any element of the first plurality and any element of the second plurality. For example, a minimum distance between said elements of at least 0.3 mm, in particular 0.5 mm and more particularly 0.7 mm may be kept. The distance between adjacent elements may be at most 5 mm, in particular at most 3 mm and more particularly at most 1.5 mm or at most 1.0 mm. In addition to grinding elements, scraper elements and/or a central element may be present, as described below.

The axis is the axis of relative rotation of the at least two housing parts with respect to one another. The axis is a central axis with respect to the housing parts and/or to the grinding device.

In a simple configuration, the grinding device is constructed in two parts. Here, two housing parts are present, each having an outer side and an inner side. In the assembled state, the inner sides delimit the interior space of the grinding device. The cannabis product to be ground can be arranged in the inner space. After grinding, the ground cannabis product is located in the interior space. The outer sides delimit the grinding device to the outside. In one configuration, one or more additional housing parts may be present, for example, to provide additional functions such as sieving. Additional housing parts may, for example, have an annular configuration and be arranged between the outer housing parts. The housing parts may have approximately the same size and, when assembled, can be manually rotated relative to each other to grind cannabis products. In particular, the housing parts have correspondingly shaped, tailored form elements which cooperate while assembling the grinding device. In particular, there is only one way of assembly. This enables an easy and faultless assembly.

In one configuration, protruding elements a housing part which the other housing part during assembly are tapered at least on one side and in particular on all sides, e.g., at an angle of at least 1°, in particular at least 2.5° and preferably at least 3.5° and/or at most 10°, in particular at most 7° and preferably at most 5°. This facilitates assembly. Such protruding elements may include a circumferential annular outer wall, grinding elements and/or a central element.

In particular, a maximum height of the grinding element measured along the axis direction is greater than a maximum length of the grinding element measured along the circumferential or movement direction and/or a maximum width if the grinding element measured along the radial direction.

In one embodiment, the grinding device is configured such that grinding occurs only when the housing parts are rotated relative to each other about an axis along a predetermined direction of rotation. In other words, no grinding or at least no defined or comparable grinding takes place if the housing parts are rotated against the predetermined direction of rotation. It is still possible that material is ground to some extent, especially if rotation against the predetermined direction of rotation is performed for a longer time period. However, no defined grinding and, in particular, no cutting of cannabis product occurs. In particular, no cutting edges are present which act if rotation is performed against the predetermined direction.

The grinding effect depending on the direction of rotation has the advantage that the grinding elements can be optimally adjusted to the direction of rotation. It is not necessary for the grinding elements to be rotationally symmetrical. In this way, an optimal shape for most effective grinding can be used. Squashing of the product to be ground can be prevented. Sticking or gumming of the grinding device due to the resin content of the cannabis products can be prevented in this way. In addition, cutting edges can be provided on the defined front sides of the grinding elements, for example.

In one embodiment, the grinding element has a cutting edge. The cutting edge is typically located at the front with respect to the predetermined direction of rotation. This means that during rotation a product to be ground comes into contact with the cutting edge of the grinding element first. The cutting edge is used for cutting or defined grinding of cannabis products. For example, the cutting edge is oriented at an angle between 80° and 100°, particularly approximately perpendicular, to a base of the grinding element.

In particular, the cutting edge has an acute angle when viewed along the direction of the axis. The angle may be at least 40°; in particular at least 50° and more particularly at least 60° and/or at most 90°, in particular at most 80° and more particularly at most 70°.

The rear portion of the grinding element may comprise or be configured as an edge and/or a surface.

In one configuration, the cutting edge is disposed on the outside of the grinding element with respect to the axis. On the outside means the area of the grinding element facing away from the axis. In one embodiment, the cutting edge represents the outermost point of the grinding element with respect to the axis.

In other words, the foremost point of the grinding element during rotation is also the outermost point of the grinding element. In this way, a defined cutting of the cannabis product can be realized and at the same time crushing can be prevented particularly effectively.

In one configuration, the front region is adjacent to the cutting edge. In particular, the front region with the greater distance to the axis is directly adjacent to the cutting edge. Thus, there is no area of the outer edge where crushing could occur. A particularly defined grinding is thus achieved.

In one configuration, the outer surface and/or the inner surface is designed as a continuous surface which may be planar or curved. A continuous surface is a surface that has no steps. Moreover, in one configuration, the continuous surface has no creases or kinks. In this way, no edges are present, and crushing can be prevented in an improved manner.

In one embodiment, the grinding element has an inwardly facing surface for conveying cannabis product inwardly. In particular, the surface is located adjacent to the cutting edge. In particular, the surface is a front surface. The surface is inclined with respect to the radial direction when viewed along the direction of the axis so that rotation along the predetermined direction of rotation causes the cannabis product to be transported inwardly. The angle of inclination may be at least 10°, in particular at least 15° and more particularly at least 20° and/or at most 40° or 35°, in particular at most 30° and more particularly at most 25°. In this way, the grinding element can convey the material inwardly particularly effectively. Conveying inward means that the distance of the material from the axis is reduced. In this way, the material is conveyed back into the area of the interior space where particularly effective grinding takes place.

A back surface of the grinding element may be arranged along the radial direction when viewed along the direction of the axis. The back surface may be planar.

In one embodiment, an inner side of the grinding element has a smaller distance to the axis in a front region with respect to the direction of rotation than in a rear region.

The grinding element thus extends further radially inward in its front region than in its rear region. In this way, crushing of material to be ground is prevented even more effectively. All features, advantages and definitions described above with respect to the similarly configured outer side may also apply to the inner side. Thus, reference is made to the above description.

The inner side is a side which faces towards the axis in a radial direction. The greater distance may be in the region of a lower inner edge bounding the grinding element at a lower end. The greater distance may be in the region of an upper inner edge bounding the grinding element at an upper end. The greater distance may be in the region between a lower end and an upper end. In particular, the distance to the axis is measured at a constant distance from a base and/or from an upper end of the grinding element.

In particular, during grinding, a counter element of the grinding device is located adjacent to the inner side of the grinding element. Due to the described configuration, the distance between the grinding element and the counter element is smallest in the front area during rotation and becomes larger towards the rear. In this way, crushing of the cannabis product is prevented particularly effectively.

The difference in the distance from the axis between the front region and the rear region may be at most 1 mm, preferably at most 0.6 mm or at most 0.4 mm and/or at least 0.1 mm, preferably at least 0.2 mm, particularly preferably at least 0.3 mm.

In one embodiment, an outer side of the grinding element is inclined towards the axis, in particular at an angle of at least 1°. In one embodiment, an inner side of the grinding element is inclined away from the axis, in particular at an angle of at least 1°. In one embodiment, a front edge and/or a front side of the grinding element is inclined backwards, in particular at an angle of at least 1°. In one embodiment, a rear side of the grinding element is inclined forwards, in particular at an angle of at least 1°.

The angle of inclination is measured between the axis and the respective side or edge. The outer side may be inclined towards the axis. The inner side may be inclined away from the axis. The front edge and/or front side may be inclined backwards. The front edge is in particular a cutting edge. The rear side may be inclined forwards. Backwards and forwards inclination are defined with respect to the direction of rotation of the respective grinding element. Thus, the grinding element has a protruding upper end which has a smaller area than its footprint. In particular, when viewed from the front with respect to the predetermined direction of rotation and/or from the axis, the grinding element is shaped like a truncated pyramid.

In either case, the angle of inclination is in particular at least 0.5°, preferably at least 1° and more preferably at least 1.5° and/or less than 10°; in particular less than 7.5°; preferably less than 5° and in one configuration less than 3°. In particular, it is the surface on the respective side which is inclined.

In one embodiment, the grinding device comprises a grinding element connected to a first housing part and a cooperating counter element connected to a second housing part. A cutting edge of the first grinding element is inclined backwards at a first angle and a cutting edge of the second grinding element is inclined backwards at a second angle. The first angle and the second angle are different.

This has the effect that during cutting, the cutting edges are arranged in an angle relative to each other instead of being arranged in parallel. Thus, the product is not torn or crushed but a defined cut is performed in which a constant shear force is applied to the product to be ground. In other words, cutting is performed according to the shear-cutting principle. In particular, this is true for all cooperating pairs of elements. The required force is further reduced, and a particular uniform grinding result is achieved.

In particular, there is a difference of at least 2°, more particular at least 5° and preferably at least 8° between the first angle and the second angle. In one example, the first angle is 10° and the second angle is 1°. Each angle can be measured between the axis and the respective cutting edge.

In one embodiment, an upper surface of the grinding element is inclined. The inclination is in particular such that the height of the grinding element reduces from a front of the grinding element to a back of the grinding element with respect to the direction of rotation.

Thus, when moved with respect to the counter elements and/or an upper boundary, which may be represented by the base of the respective other housing part, the height decreases. The highest point of the grinding element is at or near the front.

The upper surface is the surface which delimits the grinding element at a protruding and/or free end of the grinding element. The upper surface is in particular a continuous surface. The upper surface can be planar or curved.

The angle of inclination is measured between the base of the grinding element and/or a virtual plane perpendicular to the axis on the one hand and the upper surface of the grinding element on the other hand. The angle of inclination can be seen for example from a point in which the axis intersects the base of the grinding element. The angle of inclination may be at least 1°, in particular at least 4°, more particularly at least 8° and preferably at least 12° and/or at most 40°, in particular at most 30°, more particularly at most 25° and preferably at most 20°. In one configuration, the angle of inclination is approximately 15°. In absolute values, the height of the grinding element may reduce between 0.5 mm and 1.5 mm or 1.0 mm along its extension in direction of movement.

This embodiment enables to achieve a protection against crushing also between the upper surface and the corresponding region of the respectively other housing part, in particular its base. On the one hand, crushing is prevented during grinding, as there is at least essentially no decrease in distance. For this purpose, an angle of at least 1° is required and a higher angle leads to better results. On the other hand, crushing is also prevented during assembly of the grinding device. Product to be ground and/or ground product may be present at the upper surface during assembly. Due to the inclination, the material is conveyed to an adjacent position where there is no grinding element instead of being crushed between the upper surface and the corresponding region. For this purpose, an angle of at least 8° is required and a higher angle leads to better results.

In one configuration, a plurality of grinding elements are connected to a housing part of the grinding device, wherein the grinding elements are arranged in circles. In particular, two, three or four circles of grinding elements are present. In a basic configuration, only one circle may be present. For example, the corresponding grinding elements are arranged such that corresponding shape elements such as cutting edges of the grinding elements are arranged in a circle. The circles are in particular arranged concentrically around the axis.

In particular, the highest point of the grinding element contacts the base of the respectively other housing part. Alternatively, there is a small distance of typically less than 0.4 mm, preferably less than 0.2 mm, between these two elements. Thus, the grinding result is increased.

In one embodiment, the grinding device comprises a plurality of grinding elements. In particular, the plurality of grinding elements are distributed along a circle in an uneven manner. The grinding elements are arranged on a circular line. In particular, an imaginary circle is meant. In particular, the axis is the center of the circle. However, the grinding elements are distributed along the circle in an uneven manner. During rotation, grinding takes place when the distance between a grinding element and a cooperating counter element is minimal. In this relative angular position of the two housing parts, the maximum force is required for rotation. The uneven distribution has the effect that the relative angular position of different pairs of grinding elements and corresponding counter elements in which a maximum force is required is different for the different pairs. In particular, the grinding elements and counter elements are arranged such that there are no tangible force maxima, but the force is as even as possible and independent of the relative angular position of the two housing parts.

In one configuration, a circle of a first housing part has a first plurality of grinding elements, and a circle of a second housing part has a second plurality of counter elements or grinding elements cooperating with the first plurality of grinding elements. The first plurality is in particular different from the second plurality. This may apply for all pairs of cooperating elements. Thus, the force required is rendered even more even irrespective of the relative angular position.

In one configuration, a first inner circle of a first housing part has two, three or four, in particular two, grinding elements. In one configuration, a first inner circle of a second housing part has three, four or five, in particular four, grinding elements. The first inner circle of the second housing part may be arranged around a central element as described further below. In one configuration, a second middle circle of the first housing part may have five, six or seven, in particular six, grinding elements. In one configuration, a second middle circle of the second housing part may have seven, eight or nine, in particular eight, grinding elements. In one configuration, a third outer circle of the first housing part may have nine, ten or eleven, in particular ten, grinding elements. In one configuration, a third outer circle of the second housing part may have seven, eight or nine, in particular eight, grinding elements. In particular, the first housing part may comprise an annular circumferential outer wall delimiting the interior space.

In one embodiment, the grinding device further comprises a scraper element configured to remove deposits located at an edge of the housing during rotation.

In particular, fine fractions of the ground cannabis product can be deposited at the edge. For example, a deposit takes place in the area of an interior corner and/or on a peripheral surface radially bounding the interior space. The scraper element can then remove material deposited there, in particular by scraping. In this way, sticking of the edge or peripheral surface and an associated reduction in the usable volume are prevented and permanent ease of movement is ensured.

The scraper element is not considered a grinding element because it does not actively contribute to grinding. In particular, this is the case because there is no counter element which, together with the scraper element, could cause grinding or shearing of the product to be ground. Typically, the scraper element moves along a continuous edge and/or surface. In particular, this edge and/or surface is circular. The scraper element may extend at least substantially over the entire height of the interior space. Thus, the entire circumferential surface can be kept free of deposits.

For example, the scraper element is arranged on the first housing part and the edge or surface to be kept free of deposits is arranged on the second housing part. Typically, the scraper element is arranged further outwardly with respect to the axis than the grinding elements. The scraper element can basically be designed similar to or identical as the grinding element or differently. The features, definitions and advantages of the grinding element may also apply to the scraper element. Thus, reference is made to the above description.

In one embodiment, the scraper element has a leading edge. In one embodiment, the leading edge represents the outermost point of the scraper element with respect to the axis. In this way, crushing and associated disadvantages can also be prevented in the area of the scraper element. The leading edge can be designed as a cutting edge extending approximately along the direction of the axis. Deviations of 10° are permissible.

In particular, a contour and/or an angle of the scraper element corresponds to a contour and/or angle of as circumferential outer wall which delimits the interior space in a radial direction, and which is in particular arranged on the respectively other housing part.

In one configuration, an outer side of the scraper element is inclined towards the axis, in particular at an angle of at least 1°. In one configuration, an inner side of the scraper element is inclined away from the axis, in particular at an angle of at least 1°. In one configuration, a leading edge and/or a front side of the scraper element is inclined backwards, in particular at an angle of at least 1°. In one configuration, a rear side of the scraper element is inclined forwards, in particular at an angle of at least 1°.

In either case, the angle of inclination is in particular at least 0.5°, preferably at least 1° and more preferably at least 1.5° and/or less than 10°; in particular less than 7.5°; preferably less than 5° and in one configuration less than 3°. In particular, it is the surface on the respective side which is inclined. The leading edge of the scraper element may be inclined at a slight angle of, for example, 2° to 3° with respect to the axis to provide more effective and smooth scraping.

In one embodiment, the scraper element has an inwardly facing surface for conveying the deposits inwardly. In particular, the surface is located adjacent to the leading edge. In particular, the surface is a front surface. The surface is inclined with respect to the radial direction when viewed along the direction of the axis so that rotation along the predetermined direction of rotation causes the material to be transported inwardly. The angle of inclination may be at least 10°, in particular at least 15° and more particularly at least 20° and/or at most 40° or 35°, in particular at most 30° and more particularly at most 25°. In this way, the scraper element can convey the deposits inwardly particularly effectively. Conveying inward means that the distance of the material from the axis is reduced. In this way, the material is conveyed back into the area of the interior space where particularly effective grinding takes place.

The surface may be larger than the surface of the grinding element. For example, the scraper element may be widened at the front to the inside and/or to the outside. A larger surface leads to enhanced material transport.

In one configuration, two, three, four, five, six, seven or eight scraper elements are present, which are in particular evenly distributed over the circumference. Preferably, three, four or five scraper elements are present.

In one embodiment, the grinding device comprises a central element protruding from one of the housing parts. In particular, the central element is arranged such that the axis runs through the central element. The central element may be configured similarly to the grinding element. The features, definitions and advantages of the grinding element may also apply to the central element. Thus, reference is made to the above description.

The central element is in particular located at the center of the base of a housing part, in particular between the grinding elements when viewed along the axis (top view). In top view, the enter element may have a shape which is n-fold symmetrical with respect to the axis.

In one configuration, the central element has several cutting edges. Thus, it can act as a counter element for adjacent grinding elements of the respective other housing part. For example, the central element may have three, four or five cutting edges. In one configuration, side surfaces of the central element have a convex shape. This leads to particular sharp cutting edges and, thus, to a particularly good cutting action.

In one embodiment, an upper surface of the central element is inclined by at least 8°. The upper surface of the central element is defined in analogy with the upper surface of a grinding element. The angle of inclination is measured between the base of the central element and/or a virtual plane perpendicular to the axis on the one hand and the upper surface of the central element on the other hand. The angle of inclination may be at least 8°, in particular at least 12, more particularly at least 15° and/or at most 40°, in particular at most 30°, more particularly at most 25° and preferably at most 20°. In one configuration, the angle of inclination is approximately 20°. This enables material present at the upper surface to be conveyed to an adjacent position where there is no central element or grinding element instead of being crushed between the upper surface and the corresponding region. Therefore, the direction of inclination is not relevant.

In one configuration, contact surfaces of the housing parts for contacting the respectively other housing part are configured such that direct mechanical contact is only established along a line, i.e., along a circle. Thus, the contact area is minimized which leads to a reduced friction and, thus, a reduced force required for rotation. In addition, the sealing effect is improved. In one configuration, the area of direct contact is arranged in or towards the center of a potential contact surface in order to keep the ground product inside and away from the contact area.

In one configuration, the grinding device comprises a direction indicator for indicating the predetermined direction of rotation. For example, a visual direction indicator such as an arrow may be present, for example on respective outer sides of one or two housing parts. In this way, operation in accordance with the intended purpose can be ensured particularly effectively and incorrect operation can be avoided. Furthermore, it is further possible that a rotation against the direction of rotation is prevented mechanically by suitable means.

Preferably, the grinding device is produced from food grade materials. For example, the grinding device may comprise or consist of metal such as aluminum or stainless steel, or plastic. Preferably, each housing portion is integrally formed and/or each housing portion is produced from the same material. A grinding element may be integrally formed with the respective housing part. In particular, the grinding device is shaped to fit comfortably in the user's hands. For example, a maximum outer extension is not less than 3 cm, preferably not less than 4 cm and particularly preferably than 5 cm and/or not greater than 15 cm, particularly than 12 cm and preferably than 8 cm. A maximum extension measured along the axis is in particular not less than 1.5 cm, preferably than 2 cm and particularly preferably not less than 2.5 cm and/or not more than 6 cm, in particular not more than 4.5 cm and preferably not more than 3,5 cm or 3 cm. Thus, both a handy design and a possibility to keep and grind a suitable amount of cannabis product can be reached.

In particular, the housing parts have a basic shape that is rotationally symmetrical with respect to the axis. The basic shape may have the form of an elongated "U" in cross-section. Slight deviation from this basic shape are permissible. The axis is typically located centrally with respect to the housing parts. However, it is not excluded that the housing parts have a deviating shape at least on their outer sides, e.g., to facilitate grip and rotation.

In one configuration, one or two housing parts of the grinding device respectively comprise a gripping region which has a non-rotationally symmetrical shape. For example, a regular polygon such as a hexagon or an octagon may be used. This facilitates manual gripping and application of the rotating force.

The invention is explained in more detail below with reference to figures and exemplary embodiments. The figures show:
- Figure 1:: a perspective view of a closed grinding device;
- Figure 2:: a perspective view of a housing part of a grinding device;
- Figure 3:: a perspective view of another housing part of a grinding device;
- Figure 4:: a perspective view of an open grinding device;
- Figure 5:: a housing part with an enlarged detail of a grinding element in perspective view;
- Figure 6:: a housing part with an enlarged detail of a grinding element in top view;
- Figure 7:: a housing part with an enlarged detail of a central element;
- Figure 8:: a housing part with enlarged details of a scraper elements;
- Figure 9:: a side view and a sectional view along line K; and
- Figure 10:: a top view and a sectional view along line L.

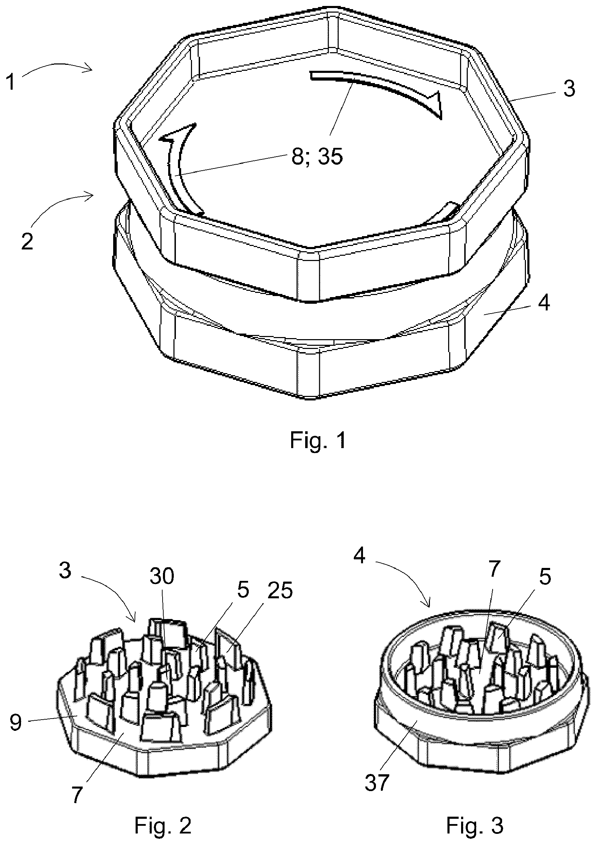

Figure 1 shows a manually driven grinding device 1 according to the invention. The grinding device 1 has a housing 2 which comprises a first housing part 3 and a second housing part 4. In the shown embodiments, the first housing part 3 is an upper housing part and the second housing part 4 is a lower housing part. However, this is interchangeable. In the shown embodiments, there is no further housing part. However, further housing parts may be arranged between the first housing part 3 and the second housing part 4 which may, for example, comprise a perforated plate, a sieve and/or a mesh.

On at least one of the housing parts 3, 4 there is at least one direction indicator 35 which is a plurality of arrows in the shown embodiment. This ensures that the user performs a relative rotation between the housing parts 3, 4 in the predetermined direction of rotation 8 to effectively grind the product.

Figures 2 and 3 show the internal configurations of first housing part 3 and the second housing part 4 . The first housing part 3 comprises a plurality of grinding elements 5, a central element 30 and a plurality of scraper elements 25. All of the mentioned elements 5, 30 and 25 are mounted on a base 7 which is planar in the present embodiment. The base 7 is a surface of the first housing part 3. The mentioned elements protrude upwards from the base 7. Between the mentioned elements there are free spaces in which the cannabis product can be positioned and/or in which the grinding elements 5 of the second housing part 4 are arranged during use. Around the mentioned elements there is a circumferential rim 9 which can be contacted by the outer wall 7 of the second housing part 4 described below during use.

The second housing part 4 is designed similarly. However, there are only grinding elements 5 arranged on the base 7, but no central element or scraper elements. In contrast, there is a circumferential annular outer wall 37 which surrounds the grinding elements 5. An outer side of the circumferential annular outer wall 37 may be inclined to facilitate assembly. An inner side of the circumferential annular outer wall 37 may also be inclined.

The scraper elements 25 are configured to remove (scrape) material to be ground and/or ground material deposited at the outer wall 37 during rotation. Thus, the scraper elements 25 are arranged on one of the housing parts 3, 4 and the outer wall 37 is arranged on another one of the housing parts 3, 4. On the other hand, central element 30 can be arranged on any of the housing parts 3, 4.

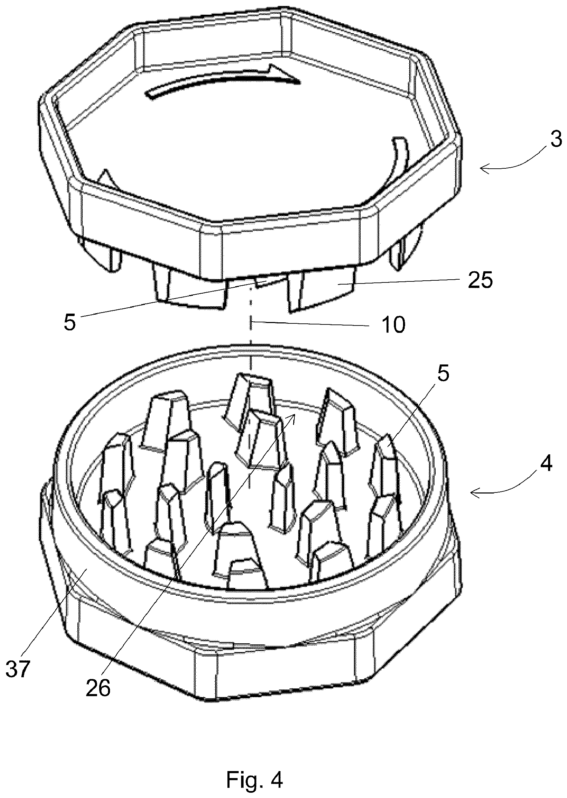

Figure 4 shows the grinding device during its assembly. On top, the first housing part 3 is arranged with the grinding elements 5, scraper elements 25 and central element pointing downwards. On the bottom, the second housing part 4 is arranged coaxially with respect to axis 10 with its grinding elements 5 pointing upwards. Now the distance between the housing parts 3, 4 is decreased such that the housing parts 3, 4 contact each other. In the assembled state, the grinding elements 5 of the second housing part 4 and the central element 30, the grinding elements 5 and the scraper elements 24 of the first housing part 3 cooperate to grind cannabis products. Figure 4 also shows the edge 26 in which deposits may accumulate which can be removed using the scraper elements 25. The assembly is particularly easy because of the tapered outer walls of the grinding elements 5, the scraper elements 25 and the circumferential annular outer wall 37.

The grinding device may comprise a holding mechanism, for example based on a magnet, for holding the 2 housing parts 3, 4 together. Thus, unscheduled disassembly can be prevented.

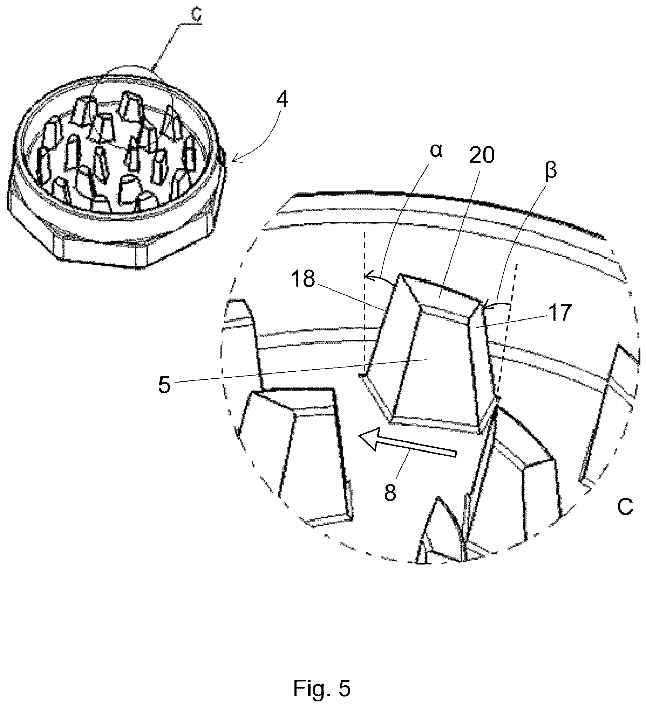

Figure 5 shows the second housing part 4 and an enlarged detail C of a grinding element 5 in a perspective view. Grinding element 5 has the general shape of a truncated pyramid based on an irregular quadrilateral. The direction of rotation 8 or moving direction is indicated by an arrow. Grinding element 5 comprises a leading edge configured as a cutting edge 18. The cutting edge 18 is tilted backwards with respect to the moving direction. It forms an angle α with the axis (the dashed lines are parallel to the axis). Grinding element 5 further comprises a rear side 17 which is tilted forwards and forms an angle β with the axis. Grinding element 5 comprises an upper surface 20 which is also inclined such that the highest point of the grinding element 5 is in front region. The height of grinding element 5 thus reduces from front to back.

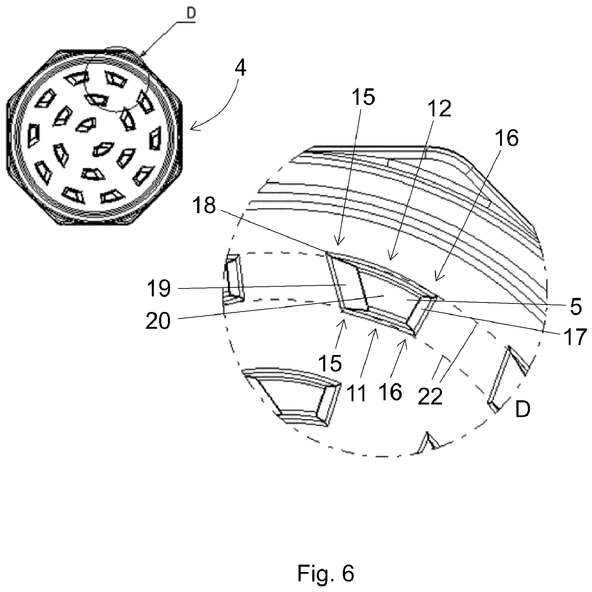

Figure 6 shows the second housing part 4 and an enlarged detail D of a grinding element 5 in a top view. Circles 22 which are coaxial to the axis are indicated in dashed lines. When comparing the outer side 12 and the inner side 11 of grinding element 5 to the course of the dashed circles 22, it becomes evident that grinding element 5 is broader in its front region 15 compared to its rear region 16. The outer side 12 has a greater distance to the axis in its front region 15 compared to its rear region 16. Thus, during rotation, crushing of the cannabis product between the grinding element 5 and a cooperating element of the other housing part is prevented. It is evident that the cutting edge 18 is the outermost point of the grinding element 5 with respect to the axis.

Turning now to the inner side 11, it is evident that the distance between the axis and the inner side 11 is smaller in a front region 15 than in a rear region 16. This also contributes to the fact that crushing of the product is prevented.

Figure 6 also shows the inclined front surface 19, the inclined rear side 17 at the upper surface 20 of grinding element 5. The front surface 19 is not only inclined backwards in a vertical direction, but it also faces inwards in order to convey cannabis product inwardly.

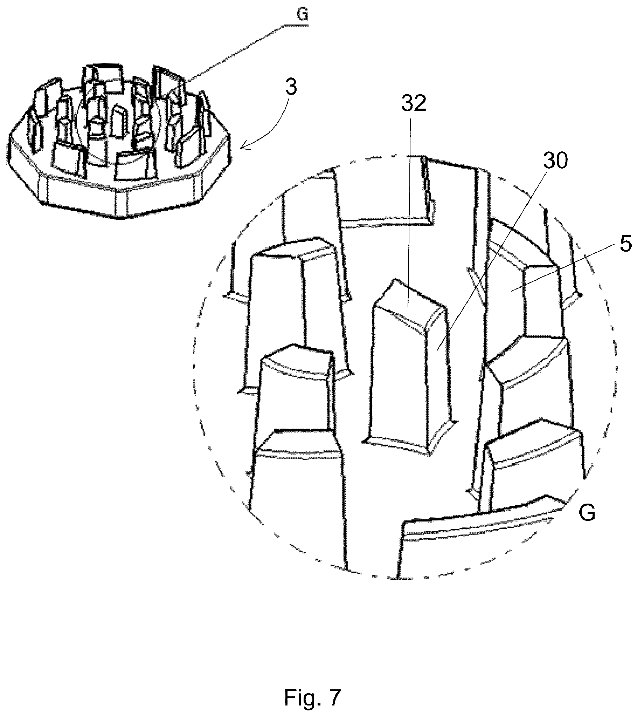

Figure 7 shows the first housing part 3 and an enlarged detail G of the central element 30 in a perspective view. Central element 30 has the basic shape of a truncated pyramid based on, for example, a square. However, the site surfaces are concave. Thus, sharp edges are created which contribute particularly effectively to grinding cannabis product. The upper surface 32 of the central element 30 is inclined at an angle of for example 20°. Thus, cannabis product present on top of the central element 30 is moved along the upper surface 32 during assembly instead of being crushed.

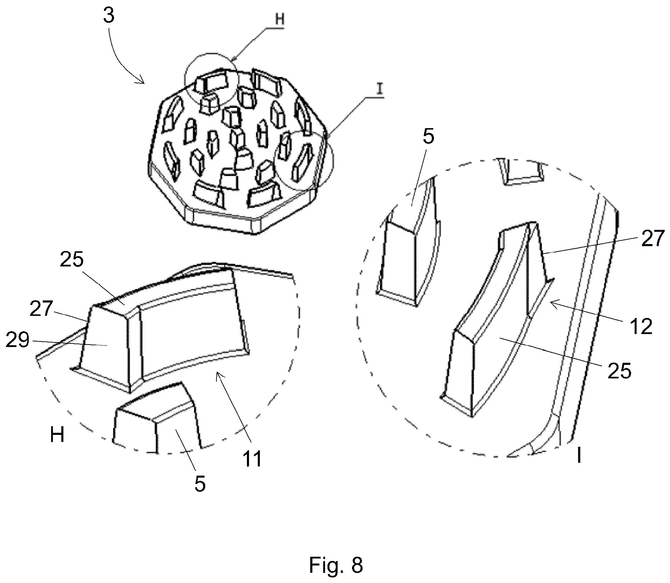

Figure 8 shows the first housing part 3 and two enlarged details H and I of scraper elements 25 in a perspective view. Scraper elements 25 have a leading edge 27 and an inclined inwardly facing surface 29 for conveying the deposits inwardly which can be seen in particular in detail H. Scraper elements 25 are in principle shaped similar to grinding elements 5, with the following deviations: the general shape of the scraper elements 25, in other words the extension in a circumferential direction, is longer. In addition, scraper elements 25 are subdivided into two parts along the length direction. A rear part which may be a longer part has an approximately constant with measured along a radial direction, whereas a front part which may be shorter part is an increasing width towards the front. On an outer side of the scraper element 25, in particular visible in detail I, they may be a kink or bend between the front part and the rear part. On an inner side of the scraper element 25, in particular visible in detail H, they may also be a kink or bend between the front part and the rear part. Thus, adhesion of ground product to the circumferential edge and to the scraper element 25 itself is prevented particularly effectively.

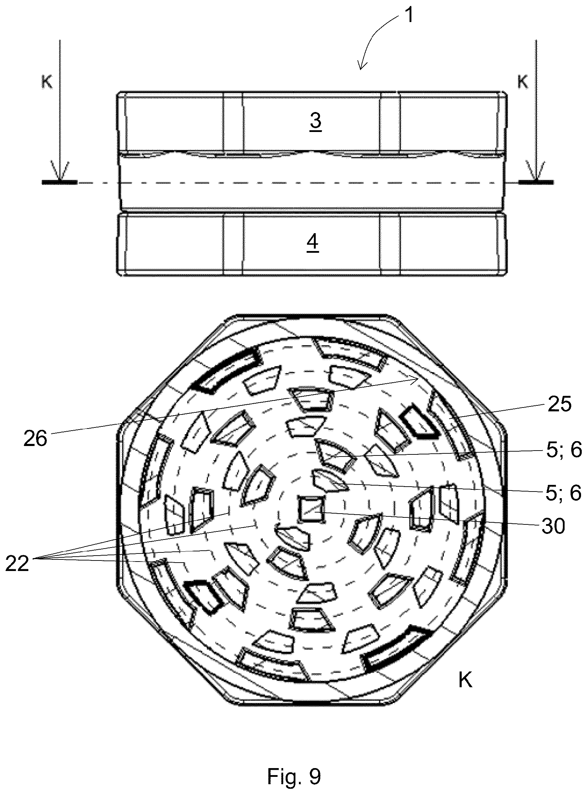

Figure 9 shows the grinding device 1 in a side view and in a section along line K. In the lower image the corporation of grinding elements 5 and also other elements can be seen. Two exemplary grinding elements 5 are indicated by reference signs 5 and 6. This means that each of these two grinding elements 5 serves as a counter element 6 to the respective other grinding element 5. The two elements are moved in opposite rotating directions during use and thus apply a shear force to the cannabis product located in between in order to cut it. It is evident that also the central element 30 and the scraper elements 25 serve as counter elements and contribute to grinding the product.

It can be seen that all elements are arranged on concentric circles 22 with respect to the central axis. The numbers of elements arranged on two adjacent circles are different. In addition, grinding elements 5 and, in in one example also scraper elements 25 are distributed in an uneven manner along the circles 22. This prevents peak forces or force maxima during use.

It can be further seen that the leading edges of scraper elements 25 form the outermost points of the scraper element 25 with respect to the axis and are in contact with the edge 26 formed by the outer circumferential annular wall. In particular, contact is established along the whole height of scraper elements 25 and/or the annular wall.

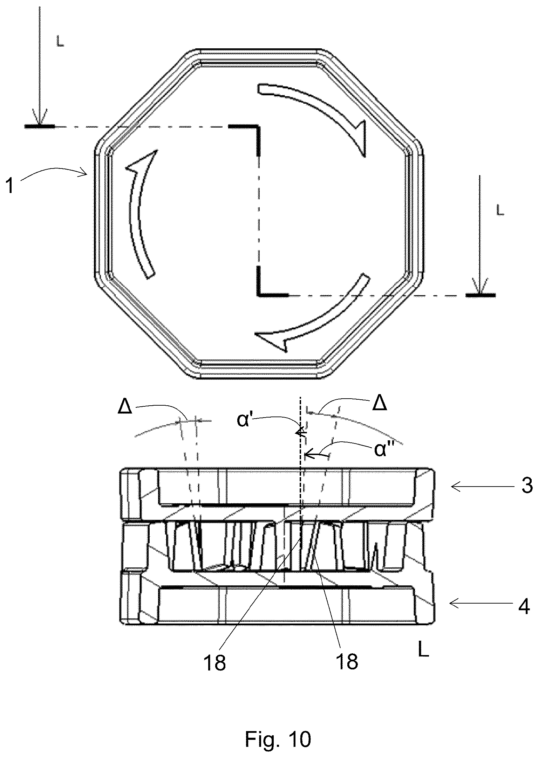

Figure 10 shows the grinding device 1 and a top view and in a section along line L. The lower image, the corporation of grinding elements 5 can be seen from the side. Grinding elements 5 of the first housing part 3 have a cutting edge 18 which is inclined backwards at a first angle α' which may be between 1° and 5°, for example approx. 3°. Grinding elements 5 of the second housing part 4 have a cutting edge 18 which is inclined backwards at a second angle α" which is different from α'. α" may be between 8° and 20°, for example approx. 15°. Each angle α' and α" is measured between the respective cutting edge 18 and the axis. The angle difference between α' and α", which is represented as Δ and may be 12° according to the above example, has the effect that cutting is performed according to the shear-cutting principle in which an essentially constant shear force is applied to the product to be cut during the whole passage of the two cooperating grinding elements 5.

### List of Reference Signs

| | |
|---|---|
| Grinding device | 1 |
| Housing | 2 |
| First housing part | 3 |
| Second housing part | 4 |
| Grinding element | 5 |
| Counter element | 6 |
| Base | 7 |
| Direction of rotation | 8 |
| Rim | 9 |
| Axis | 10 |
| Inner side | 11 |
| Outer side | 12 |
| Front region | 15 |
| Rear region | 16 |
| Rear side | 17 |
| Cutting edge | 18 |
| Surface (inclined) | 19 |
| Upper surface | 20 |
| Circle | 22 |
| Scraper element | 25 |
| Edge | 26 |
| Leading edge | 27 |
| Surface (inclined) | 29 |
| Central element | 30 |
| Upper surface | 32 |
| Direction indicator | 35 |
| Outer wall | 37 |
| Angle | α, β |
| First angle | α' |
| Second angle | α" |
| Angle difference | Δ |

## Claims

1. Grinding device (1) for cannabis products, comprising a housing (2) having at least two housing parts (3, 4) rotatable relative to one another about a central axis (10) of rotation along a predetermined direction of rotation (8) for grinding cannabis products and at least one grinding element (5) connected to a housing part (3,4) for grinding cannabis products,
**characterized in that** an outer side (12) of the grinding element (5) which faces away from the axis (10) in a radial direction has a greater distance to the axis (10) in a front region (15) with respect to the direction of rotation (8) than in a rear region (16).

2. Grinding device (1) according to the preceding claim, **characterized in that** the grinding device (1) is configured such that grinding occurs only when the housing parts (3,4) are rotated relative to each other about an axis (10) along a predetermined direction of rotation (8).

3. Grinding device (1) according to one of the preceding claims, **characterized in that** the grinding element (5) has a cutting edge (18).

4. Grinding device (1) according to the preceding claim, **characterized in that** the cutting edge (18) represents the outermost point of the grinding element (5) with respect to the axis (10).

5. Grinding device (1) according to one of the preceding claims, **characterized in that** the grinding element (5) has an inwardly facing surface (19) for conveying cannabis product inwardly.

6. Grinding device (1) according to one of the preceding claims, **characterized in that** an inner side (11) of the grinding element (5) which faces towards the axis (10) in a radial direction has a smaller distance to the axis (10) in a front region (15) with respect to the direction of rotation (8) than in a rear region (16).

7. Grinding device (1) according to one of the preceding claims, **characterized in that**:
- a front edge and/or a front side of the grinding element (5) is inclined backwards with respect to the direction of rotation (8) at an angle (α) of at least 1° with respect to the central axis (10);
- a rear side (17) of the grinding element (5) is inclined forwards with respect to the direction of rotation (8) at an angle (β) of at least 1° with respect to the central axis (10);
- an outer side (12) of the grinding element (5) is inclined towards the central axis (10) at an angle of at least 1° with respect to the central axis (10); and/or
- an inner side (11) of the grinding element (5) is inclined away from the central axis (10) at an angle of at least 1° with respect to the central axis (10).

8. Grinding device (1) according to one of the preceding claims, **characterized in that** the grinding element (5) is connected to a first housing part (3) and the grinding device (1) comprises a cooperating counter element (6) connected to a second housing part (4), wherein a cutting edge (18) of the first grinding element (5) is inclined backwards with respect to the direction of rotation (8) at a first angle (α') with respect to the central axis (10) and a cutting edge (18) of the second grinding element (5) is inclined backwards with respect to the direction of rotation (8) at a second angle (α") with respect to the central axis (10), wherein the first angle (α') and the second angle (α") are different.

9. Grinding device (1) according to one of the preceding claims, **characterized in that** an upper surface (20) of the grinding element (5) is inclined such that the height of the grinding element (5) reduces from a front of the grinding element (5) to a back of the grinding element (5) with respect to the direction of rotation (8).

10. Grinding device (1) according to one of the preceding claims, **characterized in that** the grinding device (1) comprises a plurality of grinding elements (5) which are distributed along a circle (22) in an uneven manner.

11. Grinding device (1) according to one of the preceding claims, **characterized in that** the grinding device (1) further comprises a scraper element (25) configured to remove deposits located at an edge (26) of the housing (2) during rotation.

12. Grinding device (1) according to the preceding claim, **characterized in that** the scraper element (25) has a leading edge (27), wherein the leading edge (27) represents the outermost point of the scraper element (25) with respect to the axis (10).

13. Grinding device (1) according to one of the two preceding claims, **characterized in that** the scraper element (25) has an inwardly facing surface (29) for conveying the deposits inwardly.

14. Grinding device (1) according to one of the preceding claims, **characterized in that** the grinding device (1) comprises a central element (30) protruding from one of the housing parts (3,4), wherein the central element (30) is arranged such that the axis (10) runs through the central element (30).

15. Grinding device (1) according to the preceding claim, **characterized in that** an upper surface (32) of the central element (30) is inclined by at least 8°.

## Patentansprüche

1. Mahlvorrichtung (1) für Cannabisprodukte, umfassend ein Gehäuse (2) mit mindestens zwei Gehäuseteilen (3, 4), die zum Mahlen von Cannabisprodukten um eine zentrale Drehachse (10) entlang einer vorgegebenen Drehrichtung (8) relativ zueinander drehbar sind, und mindestens ein mit einem Gehäuseteil (3, 4) verbundenes Mahlelement (5) zum Mahlen von Cannabisprodukten
**dadurch gekennzeichnet, dass** eine Außenseite (12) des Mahlelements (5), die in radialer Richtung von der Achse (10) abgewandt ist, in einem in Bezug auf die Drehrichtung (8) vorderen Bereich (15) einen größeren Abstand zur Achse (10) aufweist als in einem hinteren Bereich (16).

2. Mahlvorrichtung (1) gemäß dem vorhergehenden Anspruch, **dadurch gekennzeichnet, dass** die Mahlvorrichtung (1) so eingerichtet ist, dass das Mahlen nur dann erfolgt, wenn die Gehäuseteile (3, 4) relativ zueinander um eine Achse (10) entlang einer vorgegebenen Drehrichtung (8) gedreht werden.

3. Mahlvorrichtung (1) gemäß einem der vorhergehenden Ansprüche, **dadurch gekennzeichnet, dass** das Mahlelement (5) eine Schneidkante (18) aufweist.

4. Mahlvorrichtung (1) gemäß dem vorhergehenden Anspruch, **dadurch gekennzeichnet, dass** die Schneidkante (18) den äußersten Punkt des Mahlelements (5) in Bezug zur Achse (10) darstellt.

5. Mahlvorrichtung (1) gemäß einem der vorhergehenden Ansprüche, **dadurch gekennzeichnet, dass** das Mahlelement (5) eine nach innen gerichtete Fläche (19) aufweist, um das Cannabisprodukt nach innen zu befördern.

6. Mahlvorrichtung (1) gemäß einem der vorhergehenden Ansprüche, **dadurch gekennzeichnet, dass** eine der Achse (10) in radialer Richtung zugewandte Innenseite (11) des Mahlelements (5) in einem vorderen Bereich (15) in Bezug auf die Drehrichtung (8) einen geringeren Abstand zur Achse (10) aufweist als in einem hinteren Bereich (16).

7. Mahlvorrichtung (1) gemäß einem der vorhergehenden Ansprüche, **dadurch gekennzeichnet, dass**:
- eine Vorderkante und/oder eine Vorderseite des Mahlelements (5) in Bezug auf die Drehrichtung (8) um einen Winkel (α) von mindestens 1° gegenüber der zentralen Achse (10) nach hinten geneigt ist;
- eine Rückseite (17) des Mahlelements (5) in Bezug auf die Drehrichtung (8) in einem Winkel (β) von mindestens 1° gegenüber der zentralen Achse (10) nach vorne geneigt ist;
- eine Außenseite (12) des Mahlelements (5) in einem Winkel von mindestens 1° gegenüber der zentralen Achse (10) zur zentralen Achse (10) hin geneigt ist; und/oder
- eine Innenseite (11) des Mahlelements (5) in einem Winkel von mindestens 1° gegenüber der zentralen Achse (10) von der zentralen Achse (10) weg geneigt ist.

8. Mahlvorrichtung (1) gemäß einem der vorhergehenden Ansprüche, **dadurch gekennzeichnet, dass** das Mahlelement (5) mit einem ersten Gehäuseteil (3) verbunden ist und die Mahlvorrichtung (1) ein zusammenwirkendes Gegenelement (6) umfasst, das mit einem zweiten Gehäuseteil (4) verbunden ist, wobei eine Schneidkante (18) des ersten Mahlelements (5) in Bezug auf die Drehrichtung (8) um einen ersten Winkel (α') gegenüber der zentralen Achse (10) nach hinten geneigt ist und eine Schneidkante (18) des zweiten Mahlelements (5) in Bezug auf die Drehrichtung (8) um einen zweiten Winkel (α") gegenüber der zentralen Achse (10) nach hinten geneigt ist, wobei der erste Winkel (α') und der zweite Winkel (α") unterschiedlich sind.

9. Mahlvorrichtung (1) gemäß einem der vorhergehenden Ansprüche, **dadurch gekennzeichnet, dass** eine obere Fläche (20) des Mahlelements (5) derart geneigt ist, dass die Höhe des Mahlelements (5) von einer Vorderseite des Mahlelements (5) zu einer Rückseite des Mahlelements (5) in Bezug auf die Drehrichtung (8) abnimmt.

10. Mahlvorrichtung (1) gemäß einem der vorhergehenden Ansprüche, **dadurch gekennzeichnet, dass** die Mahlvorrichtung (1) eine Vielzahl von Mahlelementen (5) umfasst, die entlang eines Kreises (22) in ungleichmäßiger Weise verteilt sind.

11. Mahlvorrichtung (1) gemäß einem der vorhergehenden Ansprüche, **dadurch gekennzeichnet, dass** die Mahlvorrichtung (1) ferner ein Abstreifelement (25) umfasst, das dazu eingerichtet ist, Ablagerungen, die sich an einem Rand (26) des Gehäuses (2) befinden, während der Drehung zu entfernen.

12. Mahlvorrichtung (1) gemäß dem vorhergehenden Anspruch, **dadurch gekennzeichnet, dass** das Abstreifelement (25) eine Vorderkante (27) aufweist, wobei die Vorderkante (27) den äußersten Punkt des Abstreifelements (25) in Bezug auf die Achse (10) darstellt.

13. Mahlvorrichtung (1) gemäß einem der zwei vorhergehenden Ansprüche, **dadurch gekennzeichnet, dass** das Abstreifelement (25) eine nach innen gerichtete Fläche (29) zur Förderung der Ablagerungen nach innen aufweist.

14. Mahlvorrichtung (1) gemäß einem der vorhergehenden Ansprüche, **dadurch gekennzeichnet, dass** die Mahlvorrichtung (1) ein zentrales Element (30) umfasst, das aus einem der Gehäuseteile (3, 4) hervorsteht, wobei das zentrale Element (30) so angeordnet ist, dass die Achse (10) durch das zentrale Element (30) verläuft.

15. Mahlvorrichtung (1) gemäß dem vorhergehenden Anspruch, **dadurch gekennzeichnet, dass** eine obere Fläche (32) des zentralen Elements (30) um mindestens 8° geneigt ist.

## Revendications

1. Dispositif de broyage (1) pour produits de cannabis, comprenant un boîtier (2) ayant au moins deux parties de boîtier (3, 4) tournables l'une par rapport à l'autre autour d'un axe central (10) de rotation le long d'une direction de rotation (8) prédéterminée pour broyer des produits de cannabis et au moins un élément de broyage (5) relié à une partie de boîtier (3, 4) pour broyer des produits de cannabis,
**caractérisé en ce qu'**un côté extérieur (12) de l'élément de broyage (5) qui se détourne de l'axe (10) dans une direction radiale a une plus grande distance à l'axe (10) dans une région avant (15) par rapport à la direction de rotation (8) que dans une région arrière (16).

2. Dispositif de broyage (1) selon la revendication précédente, **caractérisé en ce que** le dispositif de broyage (1) est configuré de telle sorte que le broyage ne se produit que lorsque les parties du boîtier (3, 4) sont tournées l'une par rapport à l'autre autour d'un axe (10) le long d'une direction de rotation (8) prédéterminée.

3. Dispositif de broyage (1) selon l'une des revendications précédentes, **caractérisé en ce que** l'élément de broyage (5) présente un bord tranchant (18).

4. Dispositif de broyage (1) selon la revendication précédente, **caractérisé en ce que** le bord tranchant (18) représente le point le plus extérieur de l'élément de broyage (5) par rapport à l'axe (10).

5. Dispositif de broyage (1) selon l'une des revendications précédentes, **caractérisé en ce que** l'élément de broyage (5) présente une surface (19) orientée vers l'intérieur pour acheminer du produit de cannabis vers l'intérieur.

6. Dispositif de broyage (1) selon l'une des revendications précédentes, **caractérisé en ce qu'**un côté intérieur (11) de l'élément de broyage (5) qui fait face vers l'axe (10) dans une direction radiale présente une distance plus faible par rapport à l'axe (10) dans une région avant (15) par rapport à la direction de rotation (8) que dans une région arrière (16).

7. Dispositif de broyage (1) selon l'une des revendications précédentes, **caractérisé en ce que** :
- un bord avant et/ou un côté avant de l'élément de broyage (5) est incliné vers l'arrière par rapport à la direction de rotation (8) selon un angle (α) d'au moins 1° par rapport à l'axe central (10) ;
- un côté arrière (17) de l'élément de broyage (5) est incliné vers l'avant par rapport à la direction de rotation (8) selon un angle (β) d'au moins 1° par rapport à l'axe central (10) ;
- un côté extérieur (12) de l'élément de broyage (5) est incliné vers l'axe central (10) à un angle d'au moins 1° par rapport à l'axe central (10) ; et/ou
- un côté intérieur (11) de l'élément de broyage (5) est incliné à l'écart de l'axe central (10) à un angle d'au moins 1° par rapport à l'axe central (10).

8. Dispositif de broyage (1) selon l'une des revendications précédentes, **caractérisé en ce que** l'élément de broyage (5) est relié à une première partie de boîtier (3) et que le dispositif de broyage (1) comprend un contre-élément coopérant (6) relié à une deuxième partie de boîtier (4), dans lequel un bord tranchant (18) du premier élément de broyage (5) est incliné vers l'arrière par rapport à la direction de rotation (8) selon un premier angle (α') par rapport à l'axe central (10) et un bord tranchant (18) du deuxième élément de broyage (5) est incliné vers l'arrière par rapport à la direction de rotation (8) selon un deuxième angle (α") par rapport à l'axe central (10), dans lequel le premier angle (α') et le deuxième angle (α") sont différents.

9. Dispositif de broyage (1) selon l'une des revendications précédentes, **caractérisé en ce qu'**une surface supérieure (20) de l'élément de broyage (5) est inclinée de telle sorte que la hauteur de l'élément de broyage (5) diminue d'un avant de l'élément de broyage (5) à un arrière de l'élément de broyage (5) par rapport à la direction de rotation (8).

10. Dispositif de broyage (1) selon l'une des revendications précédentes, **caractérisé en ce que** le dispositif de broyage (1) comprend une pluralité d'éléments de broyage (5) qui sont répartis le long d'un cercle (22) de manière inégale.

11. Dispositif de broyage (1) selon l'une des revendications précédentes, **caractérisé en ce que** le dispositif de broyage (1) comprend en outre un élément racleur (25) configuré pour enlever des dépôts situés sur un bord (26) du boîtier (2) pendant la rotation.

12. Dispositif de broyage (1) selon la revendication précédente, **caractérisé en ce que** l'élément racleur (25) présente un bord d'attaque (27), dans lequel le bord d'attaque (27) représente le point le plus extérieur de l'élément racleur (25) par rapport à l'axe (10).

13. Dispositif de broyage (1) selon l'une des deux revendications précédentes, **caractérisé en ce que** l'élément racleur (25) présente une surface (29) orientée vers l'intérieur pour acheminer les dépôts vers l'intérieur.

14. Dispositif de broyage (1) selon l'une des revendications précédentes, **caractérisé en ce que** le dispositif de broyage (1) comprend un élément central (30) faisant saillie de l'une des parties du boîtier (3, 4), dans lequel l'élément central (30) est disposé de telle sorte que l'axe (10) traverse l'élément central (30).

15. Dispositif de broyage (1) selon la revendication précédente, **caractérisé en ce qu'**une surface supérieure (32) de l'élément central (30) est inclinée d'au moins 8°.
